(19) Europäisches Patentamt / European Patent Office / Office européen des brevets

(11) **EP 1 756 897 B1**

(12) **FASCICULE DE BREVET EUROPEEN**

(45) Date de publication et mention de la délivrance du brevet:
**26.08.2009 Bulletin 2009/35**

(21) Numéro de dépôt: **05717713.1**

(22) Date de dépôt: **15.02.2005**

(51) Int Cl.:
***H01M 8/04*** *(2006.01)*

(86) Numéro de dépôt international:
**PCT/FR2005/050095**

(87) Numéro de publication internationale:
**WO 2005/081344 (01.09.2005 Gazette 2005/35)**

(54) **Procédé et système de gestion pour la détection d'engorgement en eau dans des piles à combustibles**

Verfahren und Anordnung zur Detektion von Produktwasseransammlung in Brennstoffzellen

Method and apparatus for detecting product water accumulation in fuel cells

(84) Etats contractants désignés:
**AT BE BG CH CY CZ DE DK EE ES FI FR GB GR HU IE IS IT LI LT LU MC NL PL PT RO SE SI SK TR**

(30) Priorité: **17.02.2004 FR 0401572**

(43) Date de publication de la demande:
**28.02.2007 Bulletin 2007/09**

(73) Titulaire: **Renault SAS**
**92100 Boulogne Billancourt (FR)**

(72) Inventeurs:
- **BENCHERIF, Karim**
  **F-75019 PARIS (FR)**
- **VANNUCCI, Didier**
  **F-92120 MONTROUGE (FR)**
- **MARCHAND, Marielle**
  **F-91400 SACLAY (FR)**
- **DEVAUD, Emmanuel**
  **F-92140 CLAMART (FR)**

(56) Documents cités:
EP-A- 1 018 774     US-A1- 2001 014 415
US-A1- 2003 022 041

**Description**

La présente invention concerne un procédé et un système de gestion d'un système de pile à combustible.

Les piles à combustible sont utilisées pour fournir de l'énergie soit pour des applications stationnaires, soit dans le domaine aéronautique ou automobile, et comprennent un ensemble de cellules élémentaires.

La distribution des fluides entre les cellules et les collecteurs, ainsi que la concentration en monoxyde de carbone au coeur de la pile à combustible, sont des gages de stabilité de fonctionnement qui influent fortement sur l'équilibre électrique de la pile à combustible.

Le brevet US 6 242 120 ainsi que la demande de brevet US 2002/0022167 décrivent des procédés dans lesquels on mesure un paramètre de processus, et on compare cette mesure ou cette mesure cumulée sur un intervalle de temps à une valeur prédéterminée respective de référence, et en fonction du résultat on déclenche une purge. Ces procédés ne tiennent aucunement compte des tensions électriques ou différences de potentiels aux bornes des cellules de la pile à combustible. Ces procédés ne tiennent pas non plus compte des cas d'empoisonnement de la pile à combustible au monoxyde de carbone.

La demande de brevet EP 1 018 774 décrit un procédé et un dispositif déclenchant des purges en fonction d'une pression mesurée, les purges s'effectuant par recirculation de gaz. Ce document n'utilise pas les tensions électriques aux bornes des cellules, et ne tient pas compte des cas d'empoisonnement de la pile à combustible au monoxyde de carbone.

Les demandes de brevet WO 03/010845 et WO 03/010842 décrivent des procédés et des dispositifs déclenchant des purges à partir d'une tension moyenne de cellule calculée en divisant une tension aux bornes d'une pile par le nombre de cellules de la pile. Une comparaison de cette valeur à une valeur prédéterminée permet de détecter s'il y a un engorgement en eau, et s'il y en a un, une purge est déclenchée. Ces documents ne tiennent pas compte des cas d'empoisonnement de la pile à combustible au monoxyde de carbone

Ainsi, au vu de ce qui précède, le but de l'invention est de gérer le fonctionnement d'une pile à combustible, afin d'optimiser son fonctionnement.

Aussi, selon un aspect de l'invention, il est proposé un procédé de gestion d'un système de pile à combustible comprenant un reformeur pour alimenter la pile à combustible en gaz de reformat contenant de l'hydrogène et un compresseur pour alimenter en air ladite pile à combustible, ladite pile à combustible étant composée de cellules regroupées en $N_{mod}$ modules. Le procédé comprend des étapes lors desquelles :

on mesure des tensions électriques aux bornes de chaque cellule de chaque module de ladite pile ;

on calcule une différence de tensions électriques entre une tension électrique moyenne de cellule $\overline{U}_{cell}$ pour la pile et une tension électrique moyenne de cellule prédéterminée $U^0_{cell}$ ;

on compare ladite différence de tensions électriques $\overline{U}_{cell} - U^0_{cell}$ avec une différence de tensions électriques de seuil $\Delta U_{seuil}$ prédéterminée ; et

on en déduit l'existence d'empoisonnement au monoxyde de carbone dans la pile lorsque ladite différence de tensions électriques $\overline{U}_{cell} - U^0_{cell}$ est supérieure ou égale à ladite différence de tensions électriques de seuil $\Delta U_{seuil}$ prédéterminée, et l'absence d'empoisonnement au monoxyde de carbone dans la pile lorsque ladite différence de tensions électriques $\overline{U}_{cell} - U^0_{cell}$ est inférieure à ladite différence de tensions électriques de seuil $\Delta U_{seuil}$ prédéterminée.

Il est possible de déterminer la présence d'empoisonnement au monoxyde de carbone dans la pile. On entend par empoisonnement au monoxyde de carbone dans la pile une accumulation de monoxyde de carbone dans la pile.

On entend évidemment par tension électrique, une différence de potentiels électriques.

Dans un mode de mise en oeuvre préféré, ladite tension électrique moyenne de cellule $U^0_{cell}$ prédéterminée et ladite différence de tensions électriques de seuil $\Delta U_{seuil}$ prédéterminée dépendent du mode de fonctionnement de la pile à combustible, ladite pile à combustible comprenant comme mode de fonctionnement un mode démarrage, un mode nominal, et un mode arrêt.

Dans un mode de mise en oeuvre avantageux, en cas d'existence d'empoisonnement au monoxyde de carbone dans la pile, on ajoute de l'air dans le gaz de reformat.

Dans un mode de mise en oeuvre préféré, en cas d'absence d'empoisonnement au monoxyde de carbone dans la pile :

on calcule un écart-type $\sigma_{Ucell}$ desdites tensions électriques mesurées aux bornes des cellules de la pile ;

on compare ledit écart-type $\sigma_{Ucell}$ avec un écart-type de seuil prédéterminé ; et

on déduit de la comparaison l'existence ou l'absence d'engorgement en eau dans la pile, l'existence d'engorgement en eau dans la pile se traduisant par ledit écart-type $\sigma_{Ucell}$ étant supérieur ou égal audit écart-type de seuil $\sigma_{seuil}$ prédéterminé, et l'absence d'engorgement en eau dans la pile se traduisant par ledit écart-type $\sigma_{Ucell}$ étant inférieur audit écart-type de seuil $\sigma_{seuil}$ prédéterminé.

On entend par engorgement en eau dans la pile une accumulation d'eau dans la pile.

Selon un autre aspect de l'invention il est proposé un procédé de gestion d'un système de pile à combustible comprenant un dispositif pour alimenter la pile à combustible en hydrogène et un compresseur pour alimenter en air ladite pile à combustible, ladite pile à combustible étant composée de cellules regroupées en $N_{mod}$ modules. Le procédé comprend des étapes lors des quelles :

on mesure des tensions électriques aux bornes de chaque cellule de chaque module de ladite pile ;

on calcule un écart-type $\sigma_{Ucell}$ desdites tensions électriques mesurées aux bornes des cellules de la pile ;

on compare cedit écart-type $\sigma_{Ucell}$ avec un écart-type de seuil $\sigma_{seuil}$ prédéterminé ; et

on déduit de la comparaison l'existence ou l'absence d'engorgement en eau dans la pile, l'existence d'engorgement en eau dans la pile se traduisant par ledit écart-type $\sigma_{Ucell}$ étant supérieur ou égal audit écart-type de seuil $\sigma_{seuil}$ prédéterminé, et l'absence d'engorgement en eau dans la pile se traduisant par ledit écart-type $\sigma_{Ucell}$ étant inférieur audit écart-type de seuil $\sigma_{seuil}$ prédéterminé.

Dans un mode de mise en oeuvre préféré, en cas d'existence d'engorgement en eau dans la pile, on commande une purge dudit engorgement en eau.

Dans un mode de mise en oeuvre avantageux, ladite valeur prédéterminée d'écart-type de seuil $\sigma_{seuil}$ dépend du mode de fonctionnement de la pile à combustible, ladite pile à combustible comprenant comme mode de fonctionnement un mode démarrage, un mode nominal, et un mode arrêt.

Dans un mode de mise en oeuvre préféré, en cas d'existence d'engorgement en eau dans la pile :

on calcule, pour chaque module respectif, un écart-type des tensions électriques mesurées aux bornes des cellules du module ;

on détermine le module ayant le plus élevé des dits écarts-types calculés pour chaque module ; et

on commande ladite purge dudit engorgement en eau uniquement pour ledit module ayant le plus élevé des dits écarts-types, qui est le module le plus engorgé en eau.

Dans un mode de mise en oeuvre avantageux, ladite purge d'engorgement en eau est réalisée en augmentant les débits gazeux anodique et cathodique en entrée de chaque module ou en entrée du module le plus engorgé en eau.

Dans un mode de mise en oeuvre préféré, ladite purge d'engorgement en eau est réalisée en mettant à la pression atmosphérique les sorties anodique et cathodique de chaque module ou les sorties anodique et cathodique du module le plus engorgé en eau.

Selon l'invention, il est également proposé un premier système de gestion d'un système de pile à combustible comprenant un reformeur pour alimenter la pile à combustible en gaz de reformat comprenant de l'hydrogène, un compresseur pour alimenter en air ladite pile à combustible et une unité de commande électronique, ladite pile à combustible étant composée de cellules regroupées en $N_{mod}$ modules. Le système comprend :

un capteur de la tension électrique aux bornes de chacune desdites cellules de la pile, connecté à l'unité de commande électronique, pour transmettre des mesures de tensions électriques aux bornes d'une cellule respective ;

un dispositif d'élimination d'empoisonnement au monoxyde de carbone dans la pile ;

un dispositif de purge d'engorgement en eau dans la pile ;

des moyens de commande desdits dispositifs d'élimination d'empoisonnement au monoxyde de carbone et de purge d'engorgement en eau dans la pile ; et

des moyens de traitement dans l'unité de commande électronique, recevant les mesures desdits capteurs de la tension électrique aux bornes de chacune desdites cellules respectives et fournissant des signaux auxdits moyens de commande, lesdits moyens de traitement comprenant des moyens de calcul et des moyens de comparaison.

Dans un mode de mise en oeuvre préféré, ledit dispositif d'élimination d'empoisonnement au monoxyde de carbone dans la pile comprend une vanne commandée par lesdits moyens de commande, reliée audit compresseur, pour réguler un débit d'air ajouté dans ledit gaz de reformat.

Selon l'invention il est également proposé un second système de gestion d'un système de pile à combustible comprenant un dispositif pour alimenter la pile à combustible en hydrogène, un compresseur pour alimenter en air ladite pile à combustible et une unité de commande électronique, ladite pile à combustible étant composée de cellules regroupées en $N_{mod}$ modules. Le système comprend :

un capteur de la tension électrique aux bornes de chacune desdites cellules de la pile, connecté à l'unité de commande électronique, pour transmettre des mesures de tensions électriques aux bornes d'une cellule respective ;
un dispositif de purge d'engorgement en eau dans la pile ;
des moyens de commande desdits dispositifs d'élimination d'empoisonnement au monoxyde de carbone et de purge d'engorgement en eau dans la pile ; et
des moyens de traitement dans l'unité de commande électronique, comprenant des moyens de calculs aptes à calculer un écart-type $\sigma_{Ucell}$ desdites tensions électriques mesurées aux bornes des cellules de la pile à combustible, et des moyens de comparaison aptes à comparer ledit écart-type $\sigma_{Ucell}$ avec un écart-type de seuil $\sigma_{seuil}$ prédéterminé, lesdits moyens de traitement étant aptes à en déduire l'existence ou l'absence d'engorgement en eau dans la pile, l'existence d'engorgement en eau dans la pile se traduisant par ledit écart-type $\sigma_{Ucell}$ étant supérieur ou égal audit écart-type de seuil $\sigma_{seuil}$ prédéterminé, et l'absence d'engorgement en eau dans la pile se traduisant par ledit écart-type $\sigma_{Ucell}$ étant inférieur audit écart-type de seuil $\sigma_{seuil}$ prédéterminé.

Dans un mode de mise en oeuvre avantageux, le dispositif de purge d'engorgement en eau dans la pile comprend une vanne, commandée par lesdits moyens de commande, pour réguler le débit d'alimentation global des cathodes des modules ou $N_{mod}$ vannes commandées par lesdits moyens de commande, pour réguler le débit d'alimentation respectif de la cathode de chaque module.

Dans un mode de mise en oeuvre préféré, le dispositif de purge d'engorgement en eau dans la pile comprend une vanne commandée par lesdits moyens de commande, pour réguler le débit d'alimentation global des anodes des modules ou $N_{mod}$ vannes, commandées par lesdits moyens de commande, pour réguler le débit d'alimentation respectif de l'anode de chaque module.

Dans un mode de mise en oeuvre avantageux, le dispositif de purge d'engorgement en eau dans la pile comprend une vanne commandée par lesdits moyens de commande, de mise à la pression atmosphérique de la sortie cathodique globale de la pile à combustible ou $N_{mod}$ vannes, commandées par lesdits moyens de commande, de mise à la pression atmosphérique de la sortie cathodique respective de chaque module.

Dans un mode de mise en oeuvre préféré, le dispositif de purge d'engorgement en eau dans la pile comprend une vanne commandée par lesdits moyens de commande, de mise à la pression atmosphérique de la sortie anodique globale de la pile à combustible ou $N_{mod}$ vannes, commandées par lesdits moyens de commande, de mise à la pression atmosphérique de la sortie anodique respective de chaque module.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 illustre un premier mode de réalisation d'un système selon l'invention, alimenté en reformat ;
- la figure 2 illustre un premier mode de réalisation d'un système selon l'invention, alimenté en hydrogène ;
- la figure 3 illustre un second mode de réalisation d'un système selon l'invention, alimenté en reformat ;
- la figure 4 illustre un second mode de réalisation d'un système selon l'invention alimenté en hydrogène ;
- la figure 5 illustre un troisième mode de réalisation d'un système selon l'invention, alimenté en reformat ;
- la figure 6 illustre un troisième mode de réalisation d'un système selon l'invention, alimenté en hydrogène ;
- la figure 7 illustre un quatrième mode de réalisation d'un système selon l'invention, alimenté en reformat ;
- la figure 8 illustre un quatrième mode de réalisation d'un système selon l'invention, alimenté en hydrogène ;
- la figure 9 illustre un cinquième mode de réalisation d'un système selon l'invention, alimenté en reformat ;
- la figure 10 illustre un cinquième mode de réalisation d'un système selon l'invention, alimenté en hydrogène ;
- la figure 11 illustre un sixième mode de réalisation d'un système selon l'invention, alimenté en reformat ;
- la figure 12 illustre un sixième mode de réalisation d'un système selon l'invention, alimenté en hydrogène ;
- la figure 13 illustre un premier mode de mise en oeuvre du procédé selon l'invention ;
- la figure 14 illustre un second mode de mise en oeuvre du procédé selon l'invention ; et
- la figure 15 illustre un troisième mode de mise en oeuvre du procédé selon l'invention ;

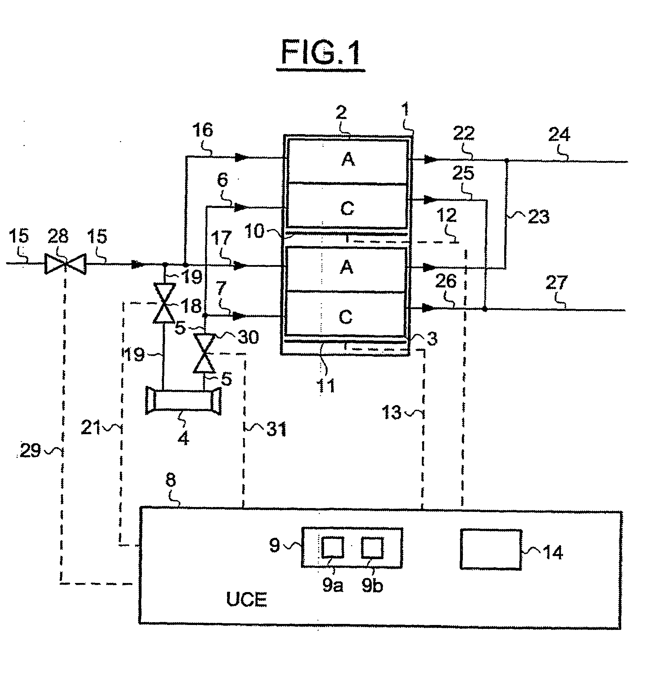

Sur la figure 1 est représentée une pile à combustible 1 composée d'un ensemble de cellules regroupées en $N_{mod}$ modules. Sur les figures, on a représenté le cas ou $N_{mod}=2$, mais la description est valable pour toutes les valeurs entières de $N_{mod}$, dont la valeur 1. Les cellules de la pile à combustible 1 sont alors réparties en 2 modules 2, 3. Chaque module 2, 3 comprend une partie anode A et une partie cathode C. Le système comprend également un compresseur d'air 4 permettant d'alimenter en oxygène les parties cathodiques C des modules 2, 3 de la pile à combustible 1. Cette alimentation globale en oxygène est fournie par un conduit 5 reliée au compresseur 4 qui fournit de l'air sous pression.

Le conduit 5 se sépare en deux conduits 6 et 7 d'alimentation en oxygène des cathodes C des modules respectifs 2, 3 de la pile à combustible 1

Une unité de commande électronique ou UCE 8 comprend des moyens de traitement 9 aptes à détecter un empoisonnement au monoxyde de carbone et un engorgement en eau dans la pile à combustible 1 à partir de mesures transmises par des ensembles 10, 11 de capteurs de la tension électrique aux bornes des cellules respectives de chaque module 2, 3. Les moyens de traitement 9 comprennent des moyens de calcul 9a et des moyens de comparaison 9b. Les ensembles 10, 11 de capteurs sont connectés à l'unité de commande électronique 8 par des connexions 12, 13 respectives. L'unité de commande électronique 8 comprend également des moyens de commande 14 apte à commander un dispositif de purge d'engorgement en eau de la pile 1, et un d'élimination d'empoisonnement au monoxyde de carbone de la pile 1.

Un conduit d'alimentation globale en reformat 15 fournit du gaz de reformat comprenant de l'hydrogène pour alimenter les anodes A des différents modules 2, 3 de la pile à combustible 1, en se séparant en des conduits d'alimentation respectifs 16, 17. Le reformeur alimentant le conduit 15 n'est pas représenté sur la figure.

L'alimentation étant du réformat comprenant de l'hydrogène, et non de l'hydrogène, il y a des risques d'empoisonnement au monoxyde de carbone de la pile à combustible 1. On a alors, en outre, un dispositif d'élimination d'empoisonnement au monoxyde de carbone dans la pile 1. Le dispositif d'élimination d'empoisonnement au monoxyde de carbone comprend une vanne commandée 18, traversée par un conduit 19 reliant le compresseur 4 au conduit 15. La vanne commandée 18 permet de réguler un débit d'air ajouté dans le reformat d'alimentation des cathodes C des modules 2, 3 de la pile à combustible 1. L'augmentation d'un débit d'air dans le reformat d'alimentation globale permet d'éliminer ou purger un empoisonnement au monoxyde de carbone. La vanne commandée 18 est connectée à l'unité de commande électronique 8 par une connexion 21.

Des conduites respectives d'évacuations 22, 23 des anodes A de chaque module 2, 3 de la pile à combustible 1, se rejoignent en une sortie globale 24 des anodes A des modules 2, 3 de la pile à combustible 1. De même, des conduites d'évacuations 25, 26 des cathodes C de chaque module respectif 2, 3 de la pile à combustible 1, se rejoignent en une sortie globale 27 des cathodes C des modules 2, 3 de la pile à combustible 1.

Le système comprend, en outre, un dispositif de purge d'engorgement en eau dans la pile à combustible 1 qui comprend une vanne commandée 28 traversée par le conduit 15 d'alimentation globale en reformat et connecté à l'unité électronique de calcul 8 par une connexion 29. Le dispositif de purge d'engorgement en eau de la pile à combustible 1 comprend également une vanne commandée 30 traversée par le conduit 5 d'alimentation globale en air, donc en oxygène, de la pile à combustible 1. La vanne commandée 30 est connectée à l'unité de commande électronique 8 par une connexion 31. Les vannes commandées 28, 30 permettent d'augmenter temporairement les débits globaux respectifs d'alimentation de la pile à combustible 1 lorsqu'un engorgement en eau est détecté, afin de purger l'engorgement en eau.

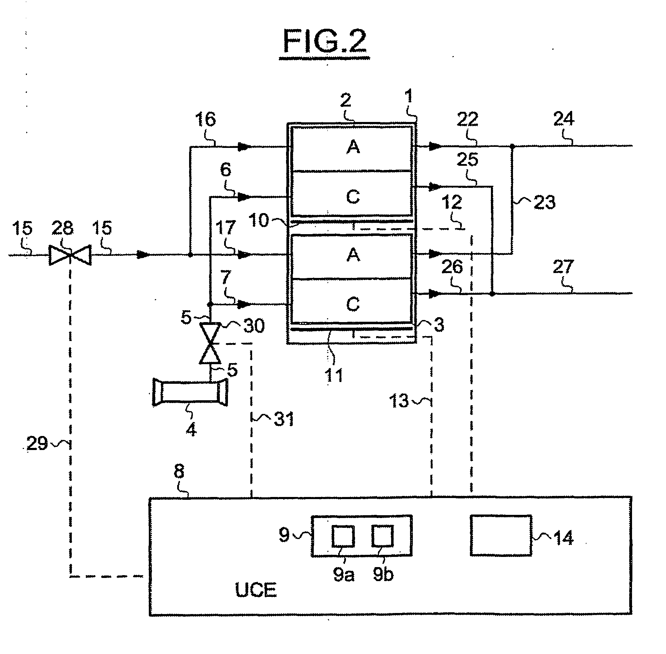

La figure 2 représente un système similaire à celui représenté par la figure 1, mais dont l'alimentation globale des anodes A des modules 2, 3 de la pile 1 est de l'hydrogène. L'alimentation étant de l'hydrogène, et non du reformat comprenant de l'hydrogène, il n'y a pas de risque d'empoisonnement au monoxyde de carbone dans la pile 1. Le système ne comprend donc pas de dispositif d'élimination d'empoisonnement au monoxyde de carbone, et donc pas de vanne commandée 18, de conduit 19, ni de connexion 21. Le dispositif d'alimentation en hydrogène du conduit 15 n'est pas représenté sur la figure.

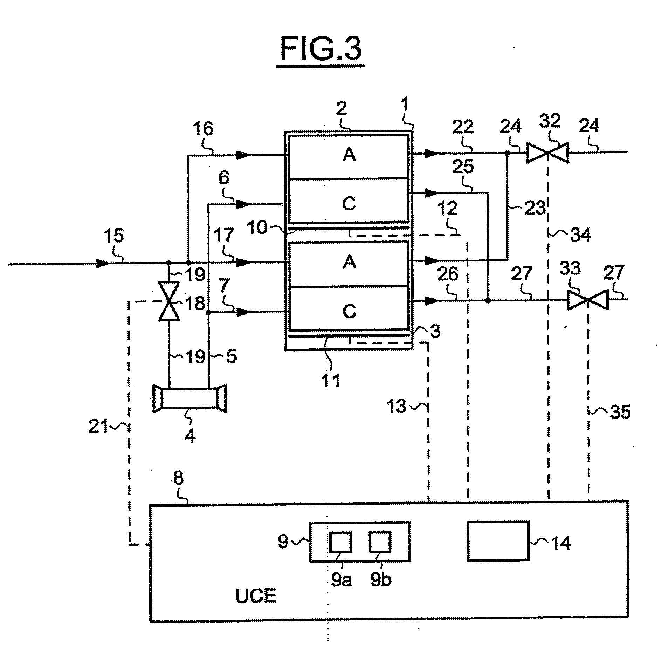

La figure 3 représente un système similaire à celui illustré par la figure 1 précédemment décrite, mais pour lequel le dispositif de purge d'engorgement en eau dans la pile à combustible 1 ne comprend pas les vannes commandées 28 et 30, mais comprend une vanne commandée 32 de mise à la pression atmosphérique de la sortie anodique globale 24 des modules 2, 3 de la pile à combustible 1. Le dispositif de purge d'engorgement en eau comprend, en outre, une vanne commandée 33 de mise à la pression atmosphérique de la sortie cathodique globale 27 des modules 2, 3 de la pile à combustible 1. Ces deux vannes 32, 33 des sorties globales anodique et cathodique sont respectivement connectées à l'unité de commande électronique 8 par des connexions 34, 35. Les vannes commandées 32, 33 permettent d'effectuer une mise à la pression atmosphérique temporaire des anodes A et des cathodes C des modules 2, 3 de la pile à combustible 1, et de purger ainsi un engorgement en eau dans la pile 1.

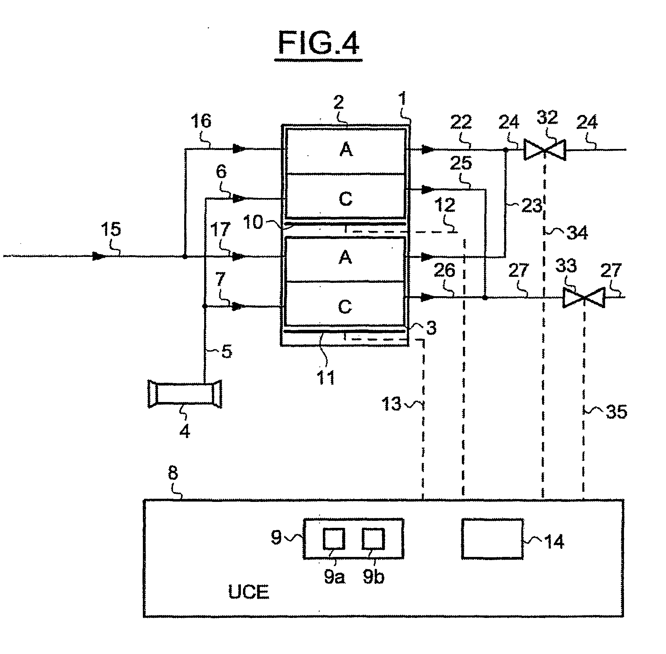

La figure 4 représente un système similaire à celui représenté par la figure 3, mais dont l'alimentation globale des anodes A des modules 2, 3 de la pile 1 est de l'hydrogène. L'alimentation étant de l'hydrogène, et non du reformat comprenant de l'hydrogène, il n'y a pas de risque d'empoisonnement au monoxyde de carbone dans la pile 1. Le système ne comprend donc pas de dispositif d'élimination d'empoisonnement au monoxyde de carbone, et donc pas de vanne commandée 18, de conduit 19, ni de connexion 21. Le dispositif d'alimentation en hydrogène du conduit 15 n'est pas représenté sur la figure.

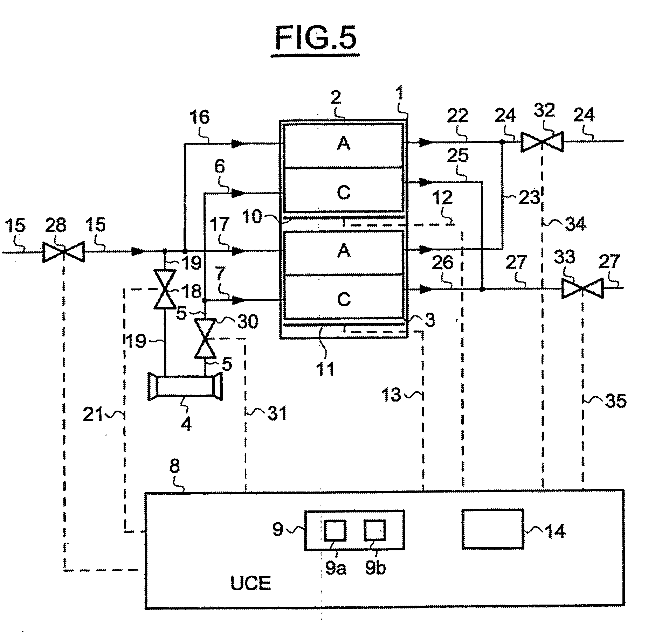

La figure 5 représente un système similaire à ceux illustrés par les figures 1 et 3 précédemment décrites, qui combine les deux dispositifs de purge d'engorgement en eau illustrées par les figures 1 et 3. Le dispositif de purge d'engorgement en eau dans la pile à combustible 1 comprend les vannes commandées 28, 30, 32 et 33, ainsi que leurs connexions respectives 29, 31, 34 et 35, qui permettent de purger un engorgement en eau dans la pile à combustible 1 en combinant simultanément leur fonctionnement décrits précédemment. Cette combinaison simultanée permet d'améliorer l'efficacité du dispositif de purge d'engorgement en eau de la pile, notamment en accélérant la purge.

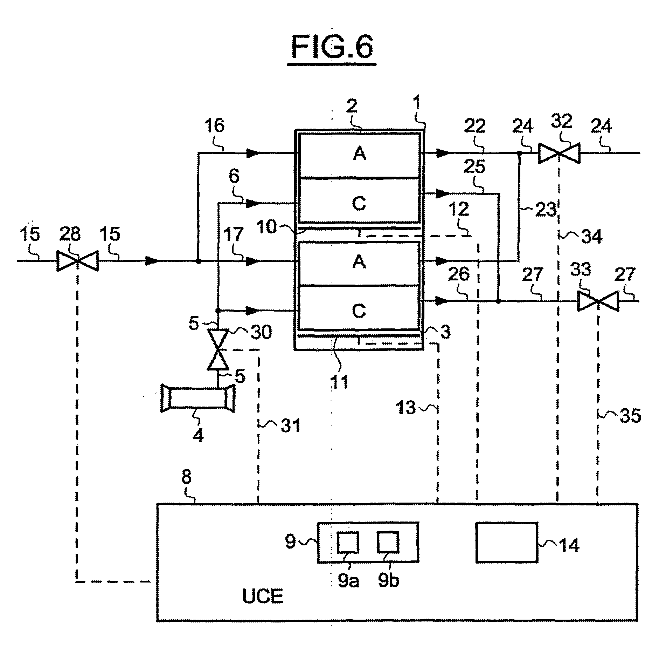

La figure 6 représente un système similaire à celui représenté par la figure 5, mais dont l'alimentation globale des anodes A des modules 2, 3 de la pile 1 est de l'hydrogène. L'alimentation étant de l'hydrogène, et non du reformat comprenant de l'hydrogène, il n'y a pas de risque d'empoisonnement au monoxyde de carbone dans la pile 1. Le système ne comprend donc pas de dispositif d'élimination d'empoisonnement au monoxyde de carbone, et donc pas de vanne commandée 18, de conduit 19, ni de connexion 21. Le dispositif d'alimentation en hydrogène du conduit 15 n'est pas représenté sur la figure.

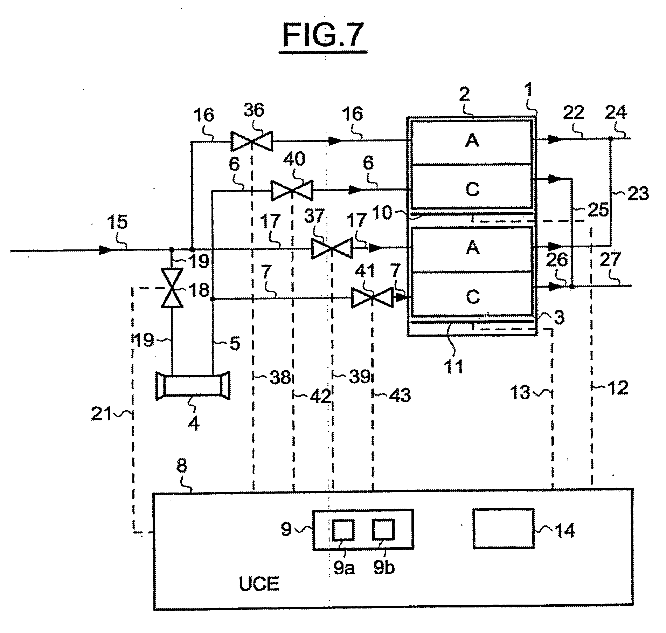

La figure 7 décrit un système semblable à celui illustré par la figure 1, mais dans lequel la vanne commandée 28 d'alimentation globale en reformat est remplacée par un ensemble de vannes commandées 36, 37 pour réguler les débits d'entrée respectifs d'alimentation en reformat des anodes A respectives des modules 2, 3 de la pile 1. Les vannes commandées 36, 37 sont reliées à l'unité de commande électronique 8 par des connexions respectives 38, 39. De plus, la vanne commandée 30 d'alimentation globale en air est remplacée par un ensemble de vannes commandées 40, 41 pour réguler les débits d'entrée respectifs d'alimentation en air des cathodes C respectives des modules 2, 3 de la pile 1. Les vannes commandées 40, 41 sont reliées à l'unité de commande électronique 8 par des connexions respectives 42, 43. Cela permet de commander une purge d'engorgement en eau dans la pile uniquement dans le module engorgé en eau, en d'autres termes dans le module le plus engorgé en eau, de la pile 1. Les moyens de traitement 9 sont alors capables de déterminer le module le plus engorgé en eau.

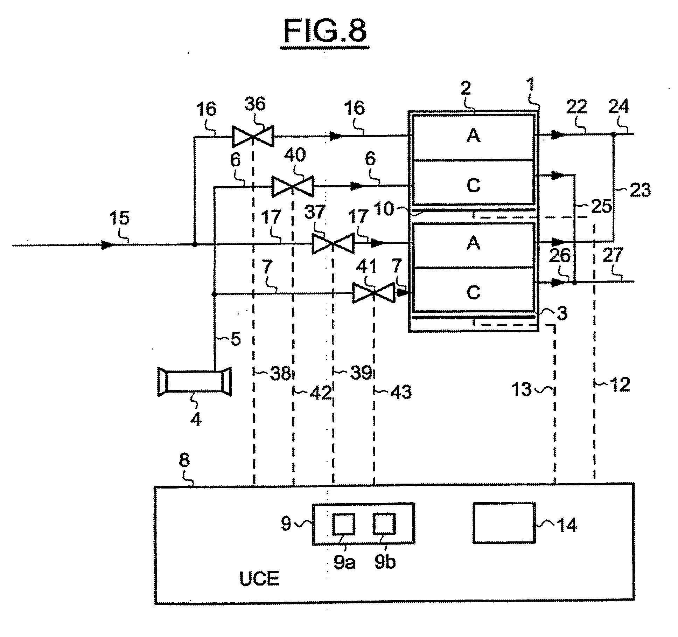

La figure 8 représente un système similaire à celui représenté par la figure 7, mais dont l'alimentation globale des anodes A des modules 2, 3 de la pile 1 est de l'hydrogène. L'alimentation étant de l'hydrogène, et non du reformat comprenant de l'hydrogène, il n'y a pas de risque d'empoisonnement au monoxyde de carbone dans la pile 1. Le système ne comprend donc pas de dispositif d'élimination d'empoisonnement au monoxyde de carbone, et donc pas de vanne commandée 18, de conduit 19, ni de connexion 21. Le dispositif d'alimentation en hydrogène du conduit 15 n'est pas représenté sur la figure.

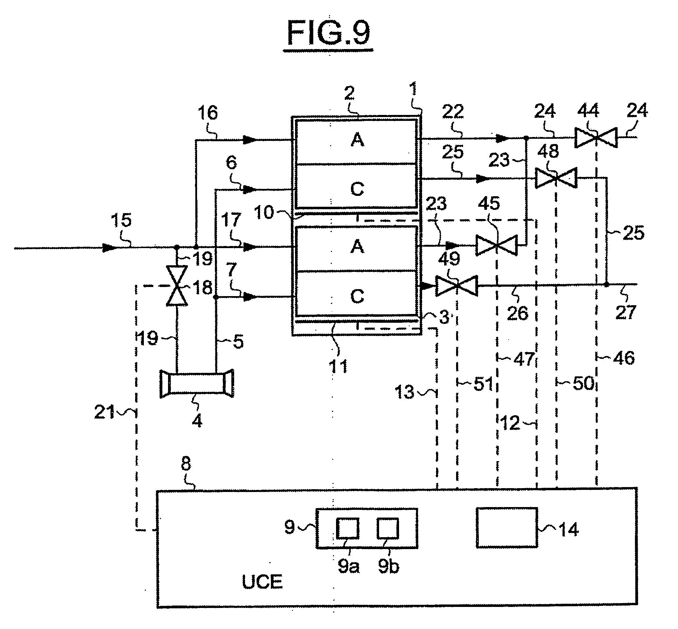

La figure 9 décrit un système semblable à celui illustré par la figure 3, mais dans lequel les vannes commandées 32 et 33 de mise à la pression atmosphérique des sorties globales anodique et cathodique 24, 27 sont remplacées par des ensembles respectifs de vannes commandées de mise à la pression atmosphérique des modules respectifs 2, 3 de la pile 1. Des vannes commandées 44, 45 de mise à la pression atmosphérique des anodes A des modules respectifs 2, 3 de la pile 1 sont reliées à l'unité de commande électronique 8 par des connexions respectives 46, 47. Des vannes commandées 48, 49 de mise à la pression atmosphérique des cathodes C des modules respectifs 2, 3 de la pile 1 sont reliées à l'unité de commande électronique 8 par des connexions respectives 50, 51. Cela permet de commander une purge d'engorgement en eau dans la pile uniquement dans le module engorgé en eau, en d'autres termes dans le module le plus engorgé en eau, de la pile 1. Les moyens de traitement 9 sont alors capables de déterminer le module le plus engorgé en eau.

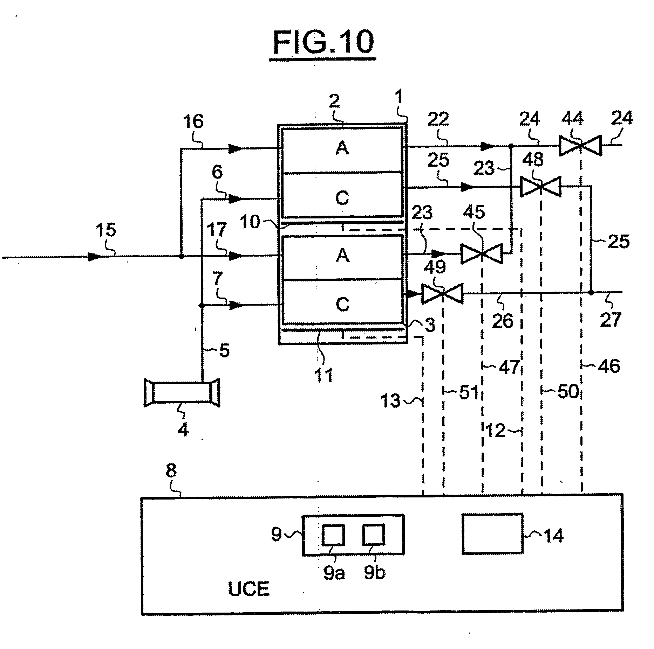

La figure 10 représente un système similaire à celui représenté par la figure 9, mais dont l'alimentation globale des anodes A des modules 2, 3 de la pile 1 est de l'hydrogène. L'alimentation étant de l'hydrogène, et non du reformat comprenant de l'hydrogène, il n'y a pas de risque d'empoisonnement au monoxyde de carbone dans la pile 1. Le système ne comprend donc pas de dispositif d'élimination d'empoisonnement au monoxyde de carbone, et donc pas de vanne commandée 18, de conduit 19, ni de connexion 21. Le dispositif d'alimentation en hydrogène du conduit 15 n'est pas représenté sur la figure.

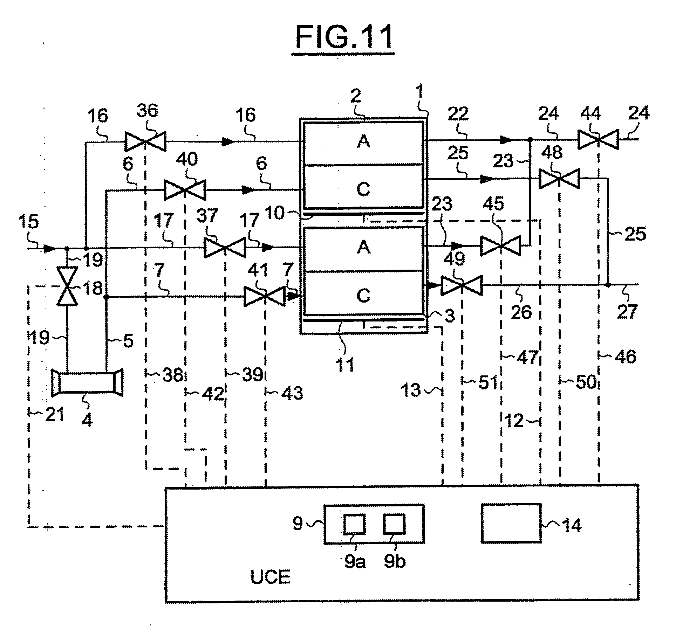

La figure 11 représente un système similaire à ceux illustrés par les figures 7 et 9 précédemment décrites, qui combine les deux dispositifs de purge d'engorgement en eau illustrées par les figures 7 et 9. Le dispositif de purge d'engorgement en eau dans la pile à combustible 1 comprend les vannes commandées d'alimentations 36, 37, 40, 41, et les vannes commandées de mise à la pression atmosphérique 44, 45, 48, 49. Cette combinaison simultanée permet d'améliorer l'efficacité du dispositif de purge sélective d'engorgement en eau de la pile, notamment en accélérant la purge dans le module le plus engorgé en eau.

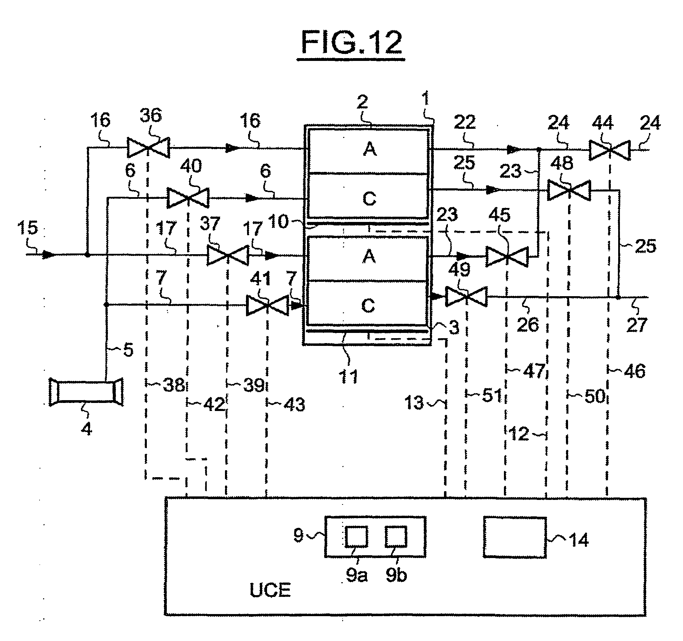

La figure 12 représente un système similaire à celui représenté par la figure 11, mais dont l'alimentation globale des anodes A des modules 2, 3 de la pile 1 est de l'hydrogène. L'alimentation étant de l'hydrogène, et non du reformat comprenant de l'hydrogène, il n'y a pas de risque d'empoisonnement au monoxyde de carbone dans la pile 1. Le système ne comprend donc pas de dispositif d'élimination d'empoisonnement au monoxyde de carbone, et donc pas de vanne commandée 18, de conduit 19, ni de connexion 21. Le dispositif d'alimentation en hydrogène du conduit 15 n'est pas représenté sur la figure.

Bien entendu toute autre combinaison est valable, par exemple une combinaison de vanne commandée d'alimentation globale et de vannes commandées d'alimentations des modules respectifs.

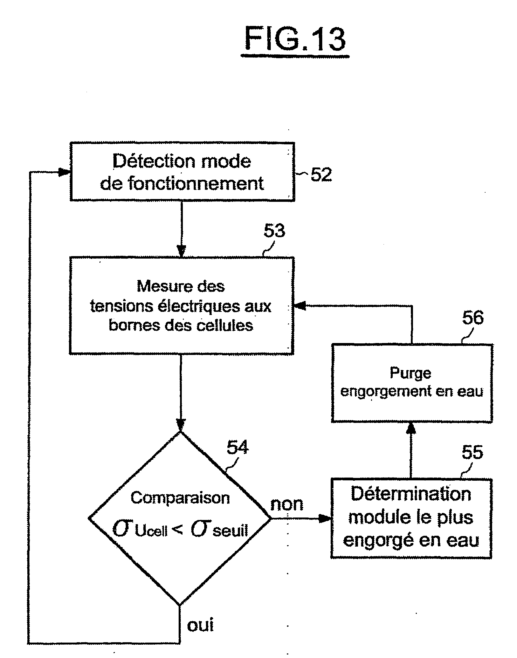

La figure 13 illustre un mode de mise en oeuvre du procédé selon l'invention dans le cas d'une alimentation du système en hydrogène, et non en reformat. Le procédé débute par une étape 52 de détection du mode de fonctionnement de la pile à combustible 1. La pile 1 comprend comme mode de fonctionnement un mode démarrage, un mode nominal, et un mode arrêt.

Lors d'une étape suivante 53, on mesure les tensions électriques, ou différences de potentiels, aux bornes des cellules de la pile 1, au moyen des ensembles 10, 11 de capteurs de la tension électrique aux bornes des cellules respectives de chaque module 2, 3. Chaque mesure de tension électrique de cellule est transmise à l'unité de commande électronique 8. Les moyens de calcul 9a des moyens de traitement 9 calculent un écart-type $\sigma_{Ucell}$ desdites tensions électriques mesurées aux bornes des cellules de la pile. Le calcul de cet écart-type $\sigma_{Ucell}$ est effectué au moyen de l'équation suivante :

$$\sigma_{U_{cell}} = \sqrt{\frac{1}{\sum\limits_{k=1}^{N_{mod}} N_{cell\_mod}(k)} \sum\limits_{j=1}^{N_{mod}} \left( \sum\limits_{i=1}^{N_{cell\_mod(j)}} \left(U_i^j(t) - \overline{U}_{cell}(t)\right)^2 \right)} \qquad (1)$$

dans laquelle :

$N_{cell\_mod}(k)$ est le nombre de cellules du module k ;
$N_{mod}$ est le nombre de modules de la pile à combustible 1 ;

$U_i^j(t)$ est la tension électrique aux bornes de la cellule i du module j à un instant t ; et

$\overline{U}_{cell}(t)$ est la tension électrique moyenne aux bornes d'une cellule de la pile 1 à l'instant t.

La tension électrique moyenne $\overline{U}_{cell}(t)$ aux bornes d'une cellule de la pile 1 à l'instant t, est définie par l'équation :

$$\overline{U}_{cell}(t) = \frac{1}{\sum\limits_{k=1}^{N_{mod}} N_{cell\_mod}(k)} \sum\limits_{j=1}^{N_{mod}} \sum\limits_{i=1}^{N_{cell\_mod(j)}} U_i^j(t) \qquad (2)$$

Toutes ces équations sont bien entendues également valables lorsque le nombre de modules $N_{mod}$ de la pile 1 est égal à 1.
Lors d'une étape 54 suivante, les moyens de comparaison 9b des moyens de traitement 9 effectuent une comparaison entre l'écart-type $\sigma_{Ucell}$ calculé et une valeur d'écart-type de seuil $\sigma_{seuil}$ prédéterminé dépendant du mode de fonctionnement de la pile à combustible.
Si l'écart-type $\sigma_{Ucell}$ est inférieur à l'écart-type de seuil $\sigma_{seuil}$ prédéterminé, alors le procédé se poursuit par ladite étape 52, car il n'y a pas d'engorgement en eau dans la pile à combustible.
Si l'écart-type $\sigma_{Ucell}$ est supérieur ou égal à l'écart-type de seuil $\sigma_{seuil}$ prédéterminé, alors le procédé se poursuit par une étape 55 optionnelle de détermination du module le plus engorgé en eau. Cette étape est optionnelle, car elle est inutile lorsque la pile 1 ne comprend qu'un seul module, ou lorsque le dispositif de purge d'engorgement en eau dans la pile 1 ne comprend que des vannes commandées de régulation d'alimentations globales ou de mise à la pression atmosphérique globale des modules de la pile 1, comme cela est représenté sur les figures 2, 4, et 6. Elle est effectuée pour les systèmes représentés sur les figures 8, 10 et 12.
Lorsque ladite étape 55 est effectuée, elle l'est en calculant un écart-type des tensions électriques des cellule de chaque module, et en déterminant le module ayant le plus grand de ces écarts-types, qui sera le module le plus engorgé en eau.

L'écart-type $\sigma_{U_{cell}}^j$ d'un module j est calculé par les moyens de calcul 9a des moyens de traitement 9, par l'équation :

$$\sigma_{U_{cell}}^j = \sqrt{\frac{1}{N_{cell\_mod}(j)} \sum\limits_{i=1}^{N_{cell\_mod}(j)} \left(U_i^j(t) - \overline{U}_{cell}(t)\right)^2} \qquad (3)$$

Puis, lors d'une étape 56, le moyens de commande 14 commande une purge d'engorgement en eau de la pile 1 ou du module le plus engorgé en eau, suivant la présence ou non de l'étape 55, présence dépendant du système. On passe ensuite à ladite étape 53.

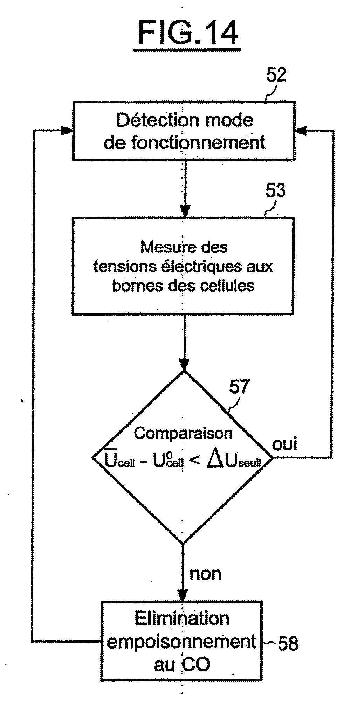

La figure 14 illustre un mode de mise en oeuvre du procédé selon l'invention dans le cas d'une alimentation du système en reformat, et non en hydrogène. Il peut donc y avoir présence d'empoisonnement au monoxyde de carbone dans la pile 1. Le procédé débute par les étapes 52 et 53. Lors de l'étape 53 il n'est pas dans ce mode de réalisation nécessaire de calculer les écarts-types mentionnés. Mais les moyens de calcul 9a calculent en outre une différence de tensions électriques entre une tension électrique moyenne de cellule $\overline{U}_{cell}$ pour la pile 1 et une tension électrique moyenne de cellule prédéterminée $U_{cell}^0$. La tension électrique moyenne de cellule prédéterminée $U_{cell}^0$ représente une tension électrique moyenne en l'absence d'empoisonnement au monoxyde de carbone dans la pile 1. Lors d'un empoisonnement au monoxyde de carbone dans la pile 1, ce sont toutes les tensions électriques aux bornes des cellules de la pile 1 qui chutent, contrairement au cas d'un engorgement en eau, où seules les tensions électriques aux bornes des cellules engorgées chutent.

S'ensuit une étape 57 de comparaison lors de laquelle les moyens de comparaison 9b des moyens de traitement 9 comparent ladite différence de tensions électriques $\overline{U}_{cell} - U_{cell}^0$ avec une différence de tensions électriques de

seuil $\Delta U_{seuil}$ prédéterminée qui dépend du mode de fonctionnement du système.

Si la différence de tensions électriques $\overline{U}_{cell} - U_{cell}^0$ est inférieure à la différence de tensions électriques de

seuil $\Delta U_{seuil}$ prédéterminée, alors le procédé se poursuit par l'étape 52.

Si la différence de tensions électriques $\overline{U}_{cell} - U_{cell}^0$ est supérieure ou égale à la différence de tensions

électriques de seuil $\Delta U_{seuil}$ prédéterminée, lors d'une étape 58, les moyens de commande 14 commande un dispositif d'élimination d'empoisonnement au monoxyde de carbone, par exemple comme celui représenté sur les figures 1, 3, 5, 7, 9 et 11.

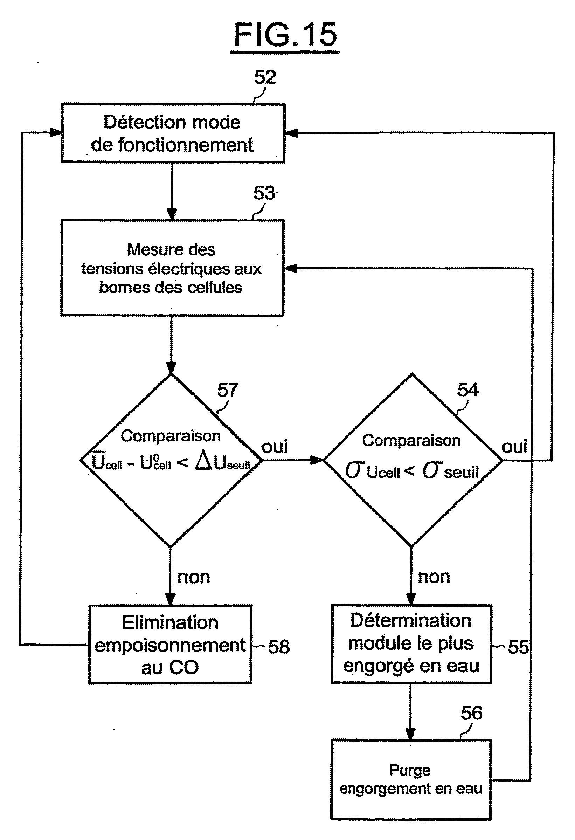

La figure 15 illustre un mode de mise en oeuvre du procédé selon l'invention dans le cas d'une alimentation du système en reformat, et non en hydrogène, combinant les étapes des deux procédés précédemment décrits, lors de la prise en compte des risques d'empoisonnement au monoxyde de carbone et les risques d'engorgement en eau dans la pile à combustible.

L'invention permet donc d'optimiser le fonctionnement d'une pile à combustible, en détectant un empoisonnement au monoxyde de carbone et un engorgement en eau dans la pile à combustible, et en éliminant la présence d'empoisonnement au monoxyde de carbone et en purgeant un engorgement en eau.

L'invention permet également de pouvoir purger un engorgement en eau de la pile par module de la pile, afin de cibler la purge.


**Revendications**

1. Procédé de gestion d'un système de pile à combustible comprenant un dispositif pour alimenter la pile à combustible (1) en hydrogène et un compresseur (4) pour alimenter en air ladite pile à combustible (1), ladite pile à combustible (1) étant composée de cellules regroupées en $N_{mod}$ modules (2, 3), **caractérisé par le fait que** :

   on mesure des tensions électriques aux bornes de chaque cellule de chaque module de ladite pile (1) ;
   on calcule un écart-type $\sigma_{Ucell}$ desdites tensions électriques mesurées aux bornes des cellules de la pile (1) ;
   on compare cedit écart-type $\sigma_{Ucell}$ avec un écart-type de seuil $\sigma_{seuil}$ prédéterminé ; et
   on déduit de la comparaison l'existence ou l'absence d'engorgement en eau dans la pile (1), l'existence d'engorgement en eau dans la pile (1) se traduisant par ledit écart-type $\sigma_{Ucell}$ étant supérieur ou égal audit écart-type de seuil $\sigma_{seuil}$ prédéterminé, et l'absence d'engorgement en eau dans la pile (1) se traduisant par ledit écart-type $\sigma_{Ucell}$ étant inférieur audit écart-type de seuil $\sigma_{seuil}$ prédéterminé.

2. Procédé selon la revendication 1, **caractérisé par le fait qu'**en cas d'existence d'engorgement en eau dans la pile (1), on commande une purge dudit engorgement en eau.

3. Procédé selon la revendication 1 ou 2, **caractérisé par le fait que** ladite valeur prédéterminée d'écart-type de seuil $\sigma_{scuil}$ dépend du mode de fonctionnement de la pile à combustible (1), ladite pile à combustible (1) comprenant comme mode de fonctionnement un mode démarrage, un mode nominal, et un mode arrêt.

**4.** Procédé selon l'une quelconque des revendications 1 à 3, **caractérisé par le fait qu'**en cas d'existence d'engorgement en eau dans la pile (1) :

   on calcule, pour chaque module respectif, un écart-type des tensions électriques mesurées aux bornes des cellules du module ;
   on détermine le module ayant le plus élevé desdits écarts-types calculés pour chaque module ; et
   on commande ladite purge dudit engorgement en eau uniquement pour ledit module ayant le plus élevé desdits écarts-types, qui est le module le plus engorgé en eau.

**5.** Procédé selon l'une quelconque des revendication 2 à 4, **caractérisé par le fait que** ladite purge d'engorgement en eau est réalisée en augmentant les débits gazeux anodique et cathodique en entrée de chaque module ou en entrée du module le plus engorgé en eau.

**6.** Procédé selon l'une quelconque des revendication 2 à 4, **caractérisé par le fait que** ladite purge d'engorgement en eau est réalisée en mettant à la pression atmosphérique les sorties anodique et cathodique de chaque module ou les sorties anodique et cathodique du module le plus engorgé en eau.

**7.** Système de gestion d'un système de pile à combustible comprenant un dispositif pour alimenter la pile à combustible (1) en hydrogène, un compresseur (4) pour alimenter en air ladite pile à combustible (1) et une unité de commande électronique (8), ladite pile à combustible (1) étant composée de cellules regroupées en $N_{mod}$ modules, ledit système est **caractérisé par le fait qu'**il comprend :

   un capteur de la tension électrique aux bornes de chacune desdites cellules de la pile, connecté à l'unité de commande électronique (8), pour transmettre des mesures de tensions électriques aux bornes d'une cellule respective ;
   un dispositif de purge d'engorgement en eau dans la pile ;
   des moyens de commande (14) desdits dispositifs d'élimination d'empoisonnement au monoxyde de carbone et de purge d'engorgement en eau dans la pile (1) ; et
   des moyens de traitement (9) dans l'unité de commande électronique (8), comprenant des moyens de calculs (9a) configurés à calculer un écart-type $\sigma_{Ucell}$ desdites tensions électriques mesurées aux bornes des cellules de la pile à combustible, et des moyens de comparaison (9b) configurés à comparer ledit écart-type $\sigma_{Ucell}$ avec un écart-type de seuil $\sigma_{seuil}$ prédéterminé, lesdits moyens de traitement (9) étant configurés à en déduire l'existence ou l'absence d'engorgement en eau dans la pile, l'existence d'engorgement en eau dans la pile se traduisant par ledit écart-type $\sigma_{Ucell}$ étant supérieur ou égal audit écart-type de seuil $\sigma_{seuil}$ prédéterminé, et l'absence d'engorgement en eau dans la pile se traduisant par ledit écart-type $\sigma_{Ucell}$ étant inférieur audit écart-type de seuil $\sigma_{seuil}$ prédéterminé.

**8.** Système selon la revendication 7, **caractérisé par le fait que** le dispositif de purge d'engorgement en eau dans la pile comprend une vanne (30) commandée par lesdits moyens de commande (14), pour réguler le débit d'alimentation global des cathodes (C) des modules ou $N_{mod}$ vannes (40, 41) commandées par lesdits moyens de commande (14), pour réguler le débit d'alimentation respectif de la cathode (C) de chaque module (2, 3).

**9.** Système selon la revendication 7 ou 8, **caractérisé par le fait que** le dispositif de purge d'engorgement en eau dans la pile (1) comprend une vanne (28) commandée par lesdits moyens de commande (14), pour réguler le débit d'alimentation global des anodes (A) des modules ou $N_{mod}$ vannes (36, 37) commandées par lesdits moyens de commande (14), pour réguler le débit d'alimentation respectif de l'anode (A) de chaque module.

**10.** Système selon l'une quelconque des revendications 7 à 9, **caractérisé par le fait que** le dispositif de purge d'engorgement en eau dans la pile (1) comprend une vanne (33) commandée par lesdits moyens de commande (14), de mise à la pression atmosphérique de la sortie cathodique globale (27) de la pile à combustible (1) ou $N_{mod}$ vannes (48, 49) commandées par lesdits moyens de commande (14), de mise à la pression atmosphérique de la sortie cathodique respective (25, 26) de chaque module (2, 3).

**11.** Système selon l'une quelconque des revendications 7 à 10, **caractérisé par le fait que** le dispositif de purge d'engorgement en eau dans la pile (1) comprend une vanne (32) commandée par lesdits moyens de commande (14), de mise à la pression atmosphérique de la sortie anodique globale (24) de la pile à combustible (1) ou $N_{mod}$ vannes (44, 45) commandées par lesdits moyens de commande (14), de mise à la pression atmosphérique de la sortie anodique respective (22, 23) de chaque module.

**Claims**

1. Fuel cell system management method comprising a device for supplying hydrogen to the fuel cell assembly (1) and a compressor (4) for supplying air to said fuel cell assembly (1), said fuel cell assembly (1) consisting of cells arranged in $N_{mod}$ modules (2, 3), **characterized in that:**

   voltages are measured across the terminals of each cell of each module of said cell assembly (1);
   a standard deviation $\sigma_{Ucell}$ of said voltages measured across the terminals of the cells of the cell assembly (1) is calculated;
   said standard deviation $\sigma_{Ucell}$ is compared with a predetermined threshold standard deviation $\sigma_{thresh}$; and
   the presence or absence of water flooding in the cell assembly (1) is determined on the basis of said comparison, the presence of water flooding in the cell assembly (1) being reflected by said standard deviation $\sigma_{Ucell}$ being equal to or higher than said predetermined threshold standard deviation $\sigma_{thresh}$, and the absence of water flooding in the cell assembly (1) being reflected by said standard deviation $\sigma_{Ucell}$ being lower than said predetermined threshold standard deviation $\sigma_{thresh}$.

2. Method according to Claim 1, **characterized in that** in case of the presence of water flooding in the cell assembly (1), said water flooding is drained.

3. Method according to either of Claims 1 and 2, **characterized in that** said predetermined threshold standard deviation value $\sigma_{thresh}$ depends on the operating mode of the fuel cell assembly (1), said fuel cell assembly (1) comprising, as operating modes, a start mode, a nominal mode and a stop mode.

4. Method according to any one of Claims 1 to 3, **characterized in that** in case of the presence of water flooding in the cell assembly (1):

   a standard deviation of the voltages measured across the terminals of the cells of the module is calculated for each respective module;
   the module having the highest of said standard deviations calculated for each module is determined; and
   said water flooding is drained exclusively for said module having the highest of said standard deviations, which is the most water-flooded module.

5. Method according to any one of Claims 2 to 4, **characterized in that** said water flooding is drained by increasing the anode and cathode gas flow rates entering each module or entering the most water-flooded module.

6. Method according to any one of Claims 2 to 4, **characterized in that** said water flooding is drained by setting the anode and cathode outlets of each module or the anode and cathode outlets of the most water-flooded module at atmospheric pressure.

7. Fuel cell system management system comprising a device for supplying hydrogen to the fuel cell assembly (1), a compressor (4) for supplying air to said fuel cell assembly (1), and an electronic control unit (8), said fuel cell assembly (1) consisting of cells arranged in $N_{mod}$ modules, said system being **characterized in that** it comprises:

   a sensor of the voltage across the terminals of each of said cells of the cell assembly, connected to the electronic control unit (8) to transmit voltage measurements across the terminals of a respective cell;
   a device for draining the water flooding in the cell assembly;
   means (14) for controlling said devices for removing carbon monoxide poisoning and for draining the water flooding in the cell assembly (1); and
   processing means (9) in the electronic control unit (8), comprising computation means (9a) configured for calculating a standard deviation $\sigma_{Ucell}$ of said voltages measured across the terminals of the cells of the fuel cell assembly, and comparison means (9b) configured for comparing said standard deviation $\sigma_{Ucell}$ with a predetermined threshold standard deviation $\sigma_{thresh}$, said processing means (9) being configured for determining therefrom the presence or absence of water flooding in the cell assembly, the presence of water flooding in the cell assembly being reflected by said standard deviation $\sigma_{Ucell}$ being equal to or higher than said predetermined threshold standard deviation $\sigma_{thresh}$, and the absence of water flooding in the cell assembly being reflected by said standard deviation $\sigma_{Ucell}$ being lower than said predetermined threshold standard deviation $\sigma_{thresh}$.

8. System according to Claim 7, **characterized in that** the device for draining the water flooding in the cell assembly comprises a valve (30) controlled by said control means (14) for adjusting the total feed rate of the cathodes (C) of the modules or $N_{mod}$ valves (40, 41) controlled by said control means (14), for adjusting the respective feed rate of the cathode (C) of each module (2, 3).

9. System according to either of Claims 7 and 8, **characterized in that** the device for draining the water flooding in the cell assembly (1) comprises a valve (28) controlled by said control means (14) for adjusting the total feed rate of the anodes (A) of the modules or $N_{mod}$ valves (36, 37) controlled by said control means (14), for adjusting the respective feed rate of the anode (A) of each module.

10. System according to any one of Claims 7 to 9, **characterized in that** the device for draining the water flooding in the cell assembly (1) comprises a valve (33), controlled by said control means (14), for setting the total cathode outlet (27) of the fuel cell assembly (1) at atmospheric pressure or $N_{mod}$ valves (48, 49) controlled by said control means (14), for setting the respective cathode outlet (25, 26) of each module (2, 3) to atmospheric pressure.

11. System according to any one of Claims 7 to 10, **characterized in that** the device for draining the water flooding in the cell assembly (1) comprises a valve (32), controlled by said control means (14), for setting the total anode outlet (24) of the fuel cell assembly (1) at atmospheric pressure or $N_{mod}$ valves (44, 45) controlled by said control means (14), for setting the respective anode outlet (22, 23) of each module to atmospheric pressure.

**Patentansprüche**

1. Verfahren zur Verwaltung eines Brennstoffbatteriesystems, das eine Vorrichtung zum Speisen der Brennstoffbatterie (1) mit Wasserstoff und einen Kompressor (4) zum Speisen der Brennstoffbatterie (1) mit Luft aufweist, wobei die Brennstoffbatterie (1) aus Zellen besteht, die in $N_{mod}$ Modulen (2, 3) zusammengefasst sind, **dadurch gekennzeichnet, dass:**

   elektrische Spannungen an den Klemmen jeder Zelle jedes Moduls der Batterie (1) gemessen werden;
   eine Standardabweichung ($\sigma_{Ucell}$ der an den Klemmen der Zellen der Batterie (1) gemessenen elektrischen Spannungen berechnet wird;
   diese Standardabweichung $\sigma_{Ucell}$ mit einer vorbestimmten Schwellen-Standardabweichung $\sigma_{seuil}$ verglichen wird; und
   aus dem Vergleich das Vorhandensein oder die Abwesenheit einer Wasserüberflutung in der Batterie (1) abgeleitet wird, wobei das Vorhandensein einer Wasserüberflutung in der Batterie (1) sich **dadurch** äußert, dass die Standardabweichung $\sigma_{Ucell}$ größer als die oder gleich der vorbestimmten Schwellen-Standardabweichung $\sigma_{seuil}$ ist, und die Abwesenheit einer Wasserüberflutung in der Batterie (1) sich **dadurch** äußert, dass die Standardabweichung $\sigma_{Ucell}$ geringer als die vorbestimmte Schwellen-Standardabweichung $\sigma_{seuil}$ ist.

2. Verfahren nach Anspruch 1, **dadurch gekennzeichnet, dass** im Fall des Vorhandenseins einer Wasserüberflutung in der Batterie (1) ein Ablassen der Wasserüberflutung gesteuert wird.

3. Verfahren nach Anspruch 1 oder 2, **dadurch gekennzeichnet, dass** der vorbestimmte Schwellen-Standardabweichungswert $\sigma_{seuil}$ von der Betriebsart der Brennstoffbatterie (1) abhängt, wobei die Brennstoffbatterie (1) als Betriebsart einen Startmodus, einen Nominalmodus und einen Stoppmodus aufweist.

4. Verfahren nach einem der Ansprüche 1 bis 3, **dadurch gekennzeichnet, dass** im Fall des Vorhandenseins einer Wasserüberflutung in der Batterie (1):

   für jedes Modul eine Standardabweichung der an den Klemmen der Zellen des Moduls gemessenen elektrischen Spannungen berechnet wird;
   das Modul mit der höchsten der für jedes Modul berechneten Standardabweichungen bestimmt wird; und
   das Ablassen der Wasserüberflutung nur für das Modul mit der höchsten Standardabweichung gesteuert wird, welches das Modul mit der größten Wasserüberflutung ist.

5. Verfahren nach einem der Ansprüche 2 bis 4, **dadurch gekennzeichnet, dass** das Ablassen der Wasserüberflutung durchgeführt wird, indem die Durchsätze an anodischem und kathodischem Gas am Eingang jedes Moduls oder am Eingang des Moduls erhöht werden, das die größte Wasserüberflutung hat.

**6.** Verfahren nach einem der Ansprüche 2 bis 4, **dadurch gekennzeichnet, dass** das Ablassen der Wasserüberflutung durchgeführt wird, indem die anodischen und kathodischen Ausgänge jedes Moduls oder die anodischen und kathodischen Ausgänge des Moduls mit der größten Wasserüberflutung auf Atmosphärendruck gebracht werden.

**7.** System zur Verwaltung eines Brennstoffbatteriesystems, das eine Vorrichtung zum Speisen der Brennstoffbatterie (1) mit Wasserstoff, einen Kompressor (4) zum Speisen der Brennstoffbatterie (1) mit Luft und eine elektronische Steuereinheit (8) aufweist, wobei die Brennstoffbatterie (1) aus Zellen besteht, die in $N_{mod}$ Modulen zusammengefasst sind, wobei das System **dadurch gekennzeichnet ist, dass** es aufweist:

einen Messfühler der elektrischen Spannung an den Klemmen jeder der Zellen der Batterie, der mit der elektronischen Steuereinheit (8) verbunden ist, um Messwerte von elektrischen Spannungen an den Klemmen einer jeweiligen Zelle zu übertragen;
eine Vorrichtung zum Ablassen der Wasserüberflutung in der Batterie;
Einrichtungen (14) zur Steuerung der Vorrichtungen zum Eliminieren einer Kohlenmonoxidvergiftung und zum Ablassen einer Wasserüberflutung in der Batterie (1); und
Verarbeitungseinrichtungen (9) in der elektronischen Steuereinheit (8), die Recheneinrichtungen (9a), welche konfiguriert sind, um eine Standardabweichung $\sigma_{ucell}$ der an den Klemmen der Zellen der Brennstoffbatterie gemessenen elektrischen Spannungen zu berechnen, und Vergleichseinrichtungen (9b) aufweisen, welche konfiguriert sind, um die Standardabweichung $\sigma_{Ucell}$ mit einer vorbestimmten Schwellen-Standardabweichung ($\sigma_{seuil}$ zu vergleichen, wobei die Verarbeitungseinrichtungen (9) konfiguriert sind, um daraus das Vorhandensein oder die Abwesenheit einer Wasserüberflutung in der Batterie abzuleiten, wobei das Vorhandensein einer Wasserüberflutung in der Batterie sich **dadurch** äußert, dass die Standardabweichung $\sigma_{Ucell}$ größer als die oder gleich der vorbestimmten Schwellen-Standardabweichung $\sigma_{seuil}$ ist, und die Abwesenheit einer Wasserüberflutung in der Batterie sich **dadurch** äußert, dass die Standardabweichung $\sigma_{Ucell}$ geringer als die vorbestimmte Schwellen-Standardabweichung $\sigma_{seuil}$ ist.

**8.** System nach Anspruch 7, **dadurch gekennzeichnet, dass** die Vorrichtung zum Ablassen einer Wasserüberflutung in der Batterie ein von den Steuereinrichtungen (14) gesteuertes Ventil (30), um den globalen Versorgungsdurchsatz der Kathoden (C) der Module zu regeln, oder von den Steuereinrichtungen (14) gesteuerte $N_{mod}$ Ventile (40, 41) enthält, um den jeweiligen Versorgungsdurchsatz der Kathode (C) jedes Moduls (2, 3) zu regeln.

**9.** System nach Anspruch 7 oder 8, **dadurch gekennzeichnet, dass** die Vorrichtung zum Ablassen einer Wasserüberflutung in der Batterie (1) ein von den Steuereinrichtungen (14) gesteuertes Ventil (28), um den globalen Versorgungsdurchsatz der Anoden (A) der Module zu regeln, oder von den Steuereinrichtungen (14) gesteuerte $N_{mod}$ Ventile (36, 37) enthält, um den jeweiligen Versorgungsdurchsatz der Anode (A) jedes Moduls zu regeln.

**10.** System nach einem der Ansprüche 7 bis 9, **dadurch gekennzeichnet, dass** die Vorrichtung zum Ablassen einer Wasserüberflutung in der Batterie (1) ein von den Steuereinrichtungen (14) gesteuertes Ventil (33), um den globalen kathodischen Ausgang (27) der Brennstoffbatterie (1) auf Atmosphärendruck zu bringen, oder von den Steuereinrichtungen (14) gesteuerte $N_{mod}$ Ventile (48, 49) enthält, um den jeweiligen kathodischen Ausgang (25, 26) jedes Moduls (2, 3) auf Atmosphärendruck zu bringen.

**11.** System nach einem der Ansprüche 7 bis 10, **dadurch gekennzeichnet, dass** die Vorrichtung zum Ablassen einer Wasserüberflutung in der Batterie (1) ein von den Steuereinrichtungen (14) gesteuertes Ventil (32), um den globalen anodischen Ausgang (24) der Brennstoffbatterie (1) auf Atmosphärendruck zu bringen, oder von den Steuereinrichtungen (14) gesteuerte $N_{mod}$ Ventile (44, 45) enthält, um den jeweiligen anodischen Ausgang (22, 23) jedes Moduls auf Atmosphärendruck zu bringen.

## FIG.1

## FIG.2

# FIG.3

# FIG.4

## FIG.5

# FIG.6

## FIG.7

## FIG.8

# FIG.9

# FIG.10

# FIG.11

# FIG.12

# FIG.13

```
┌─────────────────────┐
│   Détection mode     │ ～52
│  de fonctionnement   │
└─────────────────────┘
          │
          ▼                         53
┌─────────────────────┐
│     Mesure des       │◄──────────────┐
│ tensions électriques aux │           │
│   bornes des cellules │               │
└─────────────────────┘               │
          │                            │
          │                   ┌────────────────────┐  ～56
          │                   │       Purge         │
          │                   │ engorgement en eau  │
          │                   └────────────────────┘
          ▼                            ▲        55
       ╱54╲                            │
      ╱     ╲           non   ┌────────────────────┐
     ╱Comparaison╲──────────►│    Détermination    │
     ╲ σUcell < σseuil╱        │   module le plus    │
      ╲          ╱            │   engorgé en eau    │
       ╲        ╱             └────────────────────┘
          │
         oui
```

# FIG.14

52

Détection mode
de fonctionnement

53

Mesure des
tensions électriques aux
bornes des cellules

57

Comparaison

$\overline{U}_{cell} - U^0_{cell} < \Delta U_{seuil}$

oui

non

Elimination
empoisonnement
au CO

~58

# FIG.15

Détection mode de fonctionnement — 52

Mesure des tensions électriques aux bornes des cellules — 53

57 Comparaison $\overline{U}_{cell} - U^{0}_{cell} < \Delta U_{seuil}$

oui

54 Comparaison $\sigma U_{cell} < \sigma_{seuil}$

oui

non

non

Elimination empoisonnement au CO — 58

Détermination module le plus engorgé en eau — 55

56 Purge engorgement en eau

**EP 1 756 897 B1**

## RÉFÉRENCES CITÉES DANS LA DESCRIPTION

**Documents brevets cités dans la description**

- US 6242120 B
- US 20020022167 A
- EP 1018774 A

- WO 03010845 A
- WO 03010842 A